# EUROPEAN PATENT SPECIFICATION

(11) **EP 3 279 987 B1**
(45) Date of publication and mention of the grant of the patent: **27.11.2019**
(21) Application number: 15887708.4
(22) Date of filing: 25.08.2015
(51) Int. Cl.: H01M 8/02, C04B 35/48, C04B 35/50, H01B 1/06, H01B 1/08, H01M 8/12, C04B 35/486

(54) **PROTON CONDUCTOR, FUEL-CELL SOLID-ELECTROLYTE LAYER, CELL STRUCTURE, AND FUEL CELL PROVIDED WITH SAME**
PROTONENLEITER, BRENNSTOFFZELLENFESTELEKTROLYTSCHICHT, ZELLENSTRUKTUR UND BRENNSTOFFZELLE DAMIT
CONDUCTEUR PROTONIQUE, COUCHE D'ÉLECTROLYTE SOLIDE DE PILE À COMBUSTIBLE, STRUCTURE DE CELLULE ET PILE À COMBUSTIBLE DOTÉE DE CES DERNIERS

(30) Priority: 30.03.2015 JP 2015068668
(43) Date of publication of application: 07.02.2018
(73) Proprietor: Sumitomo Electric Industries, Ltd., Osaka-shi, Osaka 541-0041 (JP)
(72) Inventor: HIGASHINO, Takahiro, Itami-shi Hyogo 664-0016 (JP); NODA, Yohei, Itami-shi Hyogo 664-0016 (JP); HIRAIWA, Chihiro, Itami-shi Hyogo 664-0016 (JP); MIZUHARA, Naho, Itami-shi Hyogo 664-0016 (JP); TAWARAYAMA, Hiromasa, Itami-shi Hyogo 664-0016 (JP); TAKEUCHI, Hisao, Itami-shi Hyogo 664-0016 (JP); MAJIMA, Masatoshi, Itami-shi Hyogo 664-0016 (JP)
(74) Representative: Boult Wade Tennant LLP
(86) International application number: PCT/JP2015/073879
(87) International publication number: WO 2016/157566

(56) References cited:
- EP-A1- 3 023 995
- EP-A1- 3 101 662
- WO-A1-2015/008407
- JP-A- 2007 197 315
- JP-A- 2015 046 251
- YOUMIN GUO ET AL: "Effect of Ba nonstoichiometry on the phase structure, sintering, electrical conductivity and phase stability of BaCeZrYO(00.20) proton conductors", INTERNATIONAL JOURNAL OF HYDROGEN ENERGY, ELSEVIER SCIENCE PUBLISHERS B.V., BARKING, GB, vol. 36, no. 14, 7 April 2011 (2011-04-07) , pages 8450-8460, XP028226987, ISSN: 0360-3199, DOI: 10.1016/J.IJHYDENE.2011.04.037 [retrieved on 2011-04-19]

## Description

### Technical Field

The present invention relates to a proton conductor, and in particular, to an improvement in a solid electrolyte layer for a fuel cell.

### Background Art

Fuel cells include a cathode, an anode, a cell structure including a solid-electrolyte layer arranged therebetween, an oxidant channel to supply an oxidant to the cathode, and a fuel channel to supply a fuel to the anode. Perovskite oxides, such as BaCe_{0.8}Y_{0.2}O_{2.9} (BCY) and BaZr_{0.8}Y_{0.2}O_{2.9} (BZY), having proton conductivity are highly conductive in an intermediate temperature range and are promising solid electrolytes for intermediate temperature fuel cells. However, fuel cells including BCY and BZY as solid electrolyte layers are less likely to have sufficient durability.

PTL 1 reports that a sintered body composed of a perovskite oxide represented by Ba_{d}Zr_{1-x-y}CeₓM³yO₃₋ₜ (where 0.98 ≤ d ≤ 1, 0.01 ≤ x ≤ 0.5, 0.01 ≤ y ≤ 0.3, t = (2 + y - 2d)/2, and M³ represents a trivalent rare-earth element or the like) is used as a solid electrolyte layer for a fuel cell. Youmin Guo et al., International Journal of Hydrogen Energy, vol. 36, no. 14, 7 April 2011, p8450-8460 relates to the effect of Ba nonstoichiometry on the phase structure, sintering, electrical conductivity and phase stability of BaCe2rYO(00.20) proton conductors.

### Citation List

### Patent Literature

PTL 1: Japanese Unexamined Patent Application Publication No. 2007-197315

### Summary of Invention

### Technical Problem

The solid electrolyte described in PTL 1 has insufficient moisture resistance and corrodes to form large amounts of barium hydroxide and barium carbonate. These products impede power generation reactions. Thus, the formation of large amounts of these products degrades the performance of the solid electrolyte.

It is an object of the present invention to provide a proton conductor useful for a solid electrolyte layer of a fuel cell, the proton conductor having improved moisture resistance.

### Solution to Problem

An aspect of the present invention relates to a solid electrolyte layer according to claim 1.

Another aspect of the present invention relates to a cell structure according to claim 6.

Another aspect of the present invention relates to a fuel cell including the cell structure described above,
an oxidant channel to supply an oxidant to the cathode, and a fuel channel to supply a fuel to the anode.

A reference example relates to a proton conductor having a perovskite structure, the proton conductor being represented by formula (1):

BaₓZr_{y}Ce_{z}M_{1-(y+z)}O_{3-δ}

(where element M is at least one selected from the group consisting of Y, Yb, Er, Ho, Tm, Gd, and Sc, 0.85 ≤ x < 0.98, 0.70 ≤ y + z < 1.00, a ratio of y/z is 0.5/0.5 to 1/0, and δ is an oxygen vacancy concentration).

### Advantageous Effects of Invention

According to the present invention, it is possible to provide a proton conductor having good moisture resistance in a solid electrolyte layer of a fuel cell.

### Brief Description of Drawings

[Fig. 1] Figure 1 is a schematic cross-sectional view of a cell structure according to an embodiment of the present invention.
[Fig. 2] Figure 2 is a schematic cross-sectional view of a fuel cell including the cell structure in Fig. 1.

### Description of Embodiments

### [Description of Embodiments of Invention]

Embodiments of the present invention are first listed and explained.

A solid electrolyte layer for a fuel cell according to an embodiment of the present invention is according to claim 1.

(2) Another embodiment of the present invention relates to a cell structure according to claim 6.

(3) A fuel cell according to an embodiment of the present invention includes the cell structure described above, an oxidant channel to supply an oxidant to the cathode, and a fuel channel to supply a fuel to the anode.

A Ba-containing proton conductor has low moisture resistance and thus is liable to cause precipitation of Ba in the presence of water. The precipitation of Ba forms a by-product such as Ba(OH)₂ or BaCO₃ to allow corrosion to proceed. The formation of the by-product decreases the efficiency of cell reactions and the proportion of the BaₓZr_{y}Ce_{z}M_{1-(y+z)} phase to decrease the proton conductivity, degrading the performance of a solid electrolyte layer. In this embodiment, when the ratio x of Ba is within the range described above, the precipitation of Ba is inhibited to inhibit the formation of Ba(OH)₂ and BaCO₃ (in particular, Ba(OH)₂), thereby enabling the proportion of the BaₓZr_{y}Ce_{z}M_{1-(y+z)} phase to be increased. This can improve the moisture resistance of the solid electrolyte layer. When the solid electrolyte layer having high moisture resistance is used in a cell structure of a fuel cell, the fuel cell can have improved durability.

Furthermore, because high proton conductivity is easily ensured, a high power can be maintained.

(5) x that satisfies 0.85 ≤ x ≤ 0.96 is more preferred. When x is within this range, the moisture resistance can be further enhanced while high proton conductivity is ensured.

(6) 0.75 ≤ y + z ≤ 0.90 is preferred. When y + z is within this range, high proton conductivity is further easily ensured.

(7) The element M is preferably at least one selected from the group consisting of Y and Yb. Such an element M is advantageous in that high proton conductivity is easily ensured.

(8) In the solid electrolyte layer of claim 1, letting a thickness of the solid electrolyte layer be T, letting the ratio of Ba at a position 0.25T from one surface of the solid electrolyte layer be x1, and letting the ratio of Ba at a position 0.25T from the other surface of the solid electrolyte layer be x2, x1 > x2 is satisfied, and the other surface is brought into contact with a cathode of a fuel cell. In this solid electrolyte layer, the ratio of Ba in a cathode-side region is lower than that in an anode-side region, thereby providing high moisture resistance. Thus, even if water is formed on the cathode of the fuel cell by the oxidation of protons, the corrosion of the solid electrolyte layer can be more effectively inhibited. Furthermore, the ratio of Ba can be increased in the anode-side region of the solid electrolyte layer, thus ensuring high proton conductivity.

The ratio of elements in the solid electrolyte layer can be determined by evaluating the state of an element dispersion (depth profile) using energy dispersive X-ray spectroscopy (EDX). For example, the average ratio of the elements in the solid electrolyte layer (specifically, the proton conductor) at freely-selected positions (for example, five positions) in a cross section of the solid electrolyte layer in the thickness direction can be determined by measuring and averaging the ratios of the elements of the proton conductor contained in the solid electrolyte layer using EDX.

The ratio x1 of Ba at the position 0.25T from the one surface of the solid electrolyte layer and the ratio x2 of Ba at the position 0.25T from the other surface of the solid electrolyte layer can be measured by an electron probe microanalyzer (EPMA). For example, when a normal to a main surface of the solid electrolyte layer is drawn, the normal extending through one point of the solid electrolyte layer, the length of a segment of the normal extending from the interface between the cathode and the solid electrolyte layer to the interface between the solid electrolyte layer and the anode is defined as the thickness (T) of the solid electrolyte layer. The thickness T is divided into four equal lengths. The concentration of Ba is measured by EPMA at a position, in the solid electrolyte layer, 0.25T away from one main surface of the solid electrolyte layer and at a position, in the solid electrolyte layer, 0.25T away from the other main surface. The ratios x1 and x2 of Ba can be determined by performing measurement in the same way as above at freely-selected positions (for example, five positions) and averaging the resulting values.

(9) The ratio of y/z, namely, Zr/Ce, is preferably 0.5/0.5 to 0.9/0.1. When the ratio of y/z is within the range described above, it is possible to form the solid electrolyte layer having high durability and high power generation performance when the solid electrolyte layer is used for a fuel cell.

### [Details of Embodiments of the Invention]

Embodiments of the present invention will be described below with appropriate reference to the drawings. The present invention is not limited to these examples.

### [Proton Conductor]

The proton conductor has a perovskite structure (ABO₃) and is represented by formula (1) described above. The A sites of the compound of formula (1) are occupied by Ba, and the B sites are occupied by Zr and Ce. Some of the B sites are substituted with an element M (dopant) other than Zr or Ce, so that high proton conductivity can be ensured.

In the compound of formula (1), when the ratio x of Ba is within 0.85 ≤ x < 0.98 based on the total of the elements (Zr, Ce, and the element M) that occupy the B sites, the precipitation of Ba can be inhibited to inhibit the corrosion of the proton conductor due to the action of water. Furthermore, high proton conductivity is easily ensured. To further enhance the moisture resistance, x is preferably 0.85 ≤ x ≤ 0.97, more preferably 0.85 ≤ x ≤ 0.96. The lower limit of x may be 0.85, preferably 0.87 or 0.88.

The total of the ratio y of Zr and the ratio z of Ce in the elements that occupy the B sites, namely, y + z, is 0.70 ≤ y + z < 1.0, preferably 0.70 ≤ y + z ≤ 0.95, more preferably 0.75 ≤ y + z ≤ 0.90 or 0.75 ≤ y + z ≤ 0.85. When y + z is within the range, high proton conductivity is easily ensured.

The ratio of y/z is 0.5/0.5 to 1/0, preferably 0.5/0.5 to 0.9/0.1, more preferably 0.6/0.4 to 0.9/0.1 or 0.7/0.3 to 0.9/0.1. When the ratio of y/z is within the range, high moisture resistance is easily provided to easily enhance the durability of the solid electrolyte layer. Furthermore, when the solid electrolyte layer is used for a fuel cell, high power generation performance is easily provided.

When the proton conductor contains the element M, high proton conductivity is provided. To easily ensure high proton conductivity, the element M is preferably Y and/or Yb. From the viewpoint of achieving high proton conductivity, the proportion of the total of Y and Yb in the element M is preferably 50 atomic percent or more, more preferably 80 atomic percent or more. The element M may be composed of Y and/or Yb alone.

In the compound formula (1), the oxygen vacancy concentration δ can be determined, depending on the amount of the element M, and is, for example, 0 ≤ δ ≤ 0.15.

### [Solid Electrolyte Layer]

The solid electrolyte layer contains the proton conductor. Although the solid electrolyte layer can contain a component other than the compound of formula (1), the content of the component is preferably minimized from the viewpoint of easily ensuring high moisture resistance and high proton conductivity. For example, 50% or more by mass or 70% or more by mass of the solid electrolyte layer is preferably composed of the compound of formula (1). The average composition of the entire solid electrolyte layer may be the composition of formula (1). The component other than the compound of formula (1) is not particularly limited, and compounds known as solid-electrolytes (including compounds that do not have proton conductivity) are exemplified.

The solid electrolyte layer has a thickness of, for example, 1 µm to 50 µm, preferably 3 µm to 20 µm. When the solid electrolyte layer has a thickness within the range, it is preferable in that the resistance of the solid electrolyte layer can be lowered.

The solid electrolyte layer can form a cell structure together with a cathode and an anode and can be incorporated into a fuel cell. In the cell structure, the solid electrolyte layer is held between the cathode and the anode. One main surface of the solid electrolyte layer is in contact with the anode, and the other main surface is in contact with the cathode. In a fuel cell, because water is generated on a cathode by the oxidation of protons, in particular, a cathode-side region of a solid electrolyte layer is liable to be corroded by water generated on the cathode. In this embodiment of the present invention, at least the cathode-side region of the solid electrolyte layer is composed of the proton conductor of formula (1), thus enabling the corrosion of the solid electrolyte layer to be effectively inhibited.

In the solid electrolyte layer, letting the thickness of the solid electrolyte layer be T, letting the ratio of Ba at a position 0.25T from one surface of the solid electrolyte layer be x1, and letting the ratio of Ba at a position 0.25T from the other surface of the solid electrolyte layer be x2, x1 > x2 is satisfied. When the other surface is in contact with the cathode, the high moisture resistance of the cathode-side region of the solid electrolyte layer can be effectively used even if water is formed on the cathode, thereby effectively inhibiting the corrosion of the solid electrolyte layer.

The ratio of Ba in the solid electrolyte layer may vary so as to be increased with increasing distance from the cathode side toward the anode side. The variation may be continuous or stepwise. The variation of the ratio of Ba only needs to be identifiable as a general trend in the solid electrolyte layer.

Because the cathode-side region is composed of the proton conductor of formula (1), the ratio x2 of Ba in this region can be a value selected from the exemplified range of x. The ratio x1 of Ba in the anode-side region is not particularly limited as long as x1 > x2. x1 is preferably 0.98 ≤ x1 and may be 0.98 ≤ x1 ≤ 1.10. The difference between x1 and x2 is, for example, preferably 0.05 or more or 0.10 or more. When x1 and/or the difference between x1 and x2 is within the range, the effect of inhibiting the corrosion of the solid electrolyte layer is further enhanced, and high proton conductivity is easily ensured.

The proton conductor of formula (1) can be produced by mixing raw materials containing constituent elements in such a manner that the ratio of Ba to Zr to Ce to the element M is the composition of formula (1), and firing the materials. The firing temperature is, for example, 1200°C to 1800°C, preferably 1400°C to 1700°C. The firing can be performed in an oxygen atmosphere such as air. Examples of the raw materials include oxides and carbonates. Among the raw materials, barium oxide, barium carbonate, or the like is preferably used as a Ba source. Zirconium oxide is preferably used as a Zr source. Cerium oxide is preferably used as a Ce source. As a source of the element M, an oxide such as yttrium oxide or ytterbium oxide is preferably used. In each type of source, the raw materials may be used alone or in combination of two or more.

As a raw material, a composite oxide may be used. For example, the proton conductor of formula (1) can be produced by mixing a composite oxide containing Zr (or Zr and Ce) and the element M (for example, Y) with barium oxide and/or barium carbonate and firing the resulting mixture in the same way as above.

The solid electrolyte layer can be formed by firing an electrolyte paste containing the proton conductor, a binder, and a dispersion medium (for example, water and/or an organic solvent). A coating can be formed by, for example, applying the electrolyte paste to main surfaces of the anode and the cathode. Prior to the firing, debinding treatment to remove the binder by heating may be performed. The firing may be performed by a combination of calcination, which is performed at a relatively low temperature, and a main firing, which is performed at a temperature higher than that in the calcination. An electrolyte paste containing a raw material in place of the proton conductor may be used, and the raw material may be converted into the proton conductor at the time of the formation of the solid electrolyte layer by firing.

Examples of the binder include known materials used for solid electrolyte layers of fuel cells, for example, cellulose derivatives such as ethyl cellulose (for example, cellulose ether), vinyl acetate-based resins (including saponified products of vinyl acetate-based resins such as polyvinyl alcohols), polymer binders such as acrylic resins, and waxes such as paraffin waxes. The amount of the binder may be, for example, 3 parts by mass to 100 parts by mass per 100 parts by mass of the proton conductor.

The temperature of the calcination is, for example, 800°C or higher and lower than 1,200°C. The temperature of the main firing is, for example, 1,200°C to 1,800°C or 1,400°C to 1,700°C. Each of the calcination and the main firing may be performed in an air atmosphere and may be performed in an oxygen-gas atmosphere having a higher oxygen content than air.

The temperature of the debinding treatment can be determined, depending on the type of binder. In the case where the calcination is performed, the temperature of the debinding treatment may be lower than that of the calcination. The temperature of the debinding treatment may be, for example, 400°C or higher and lower than 800°C. The debinding treatment may be performed in an air atmosphere.

The solid electrolyte layer having a difference in the ratio of Ba between the cathode-side region and the anode-side region can be produced by the use of electrolyte pastes having different ratios of Ba. More specifically, for example, the solid electrolyte layer can be formed by applying a first electrolyte paste to one main surface of the anode to form a first coating, applying a second electrolyte paste to a surface of the first coating to form a second coating, the second electrolyte paste having a lower ratio of Ba than the first electrolyte paste, and performing firing. Prior to the formation of the second coating, the first coating may be dried, and, for example, debinding treatment and calcination may also be performed. The electrolyte pastes are not limited to two types of electrolyte pastes having different ratios of Ba, and three or more types of electrolyte pastes may be used.

### [Cell Structure]

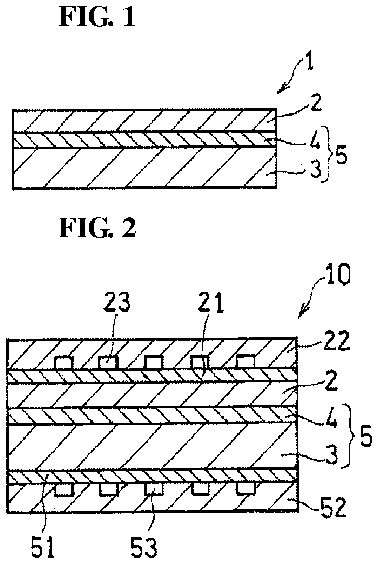

Figure 1 is a schematic cross-sectional view of a cell structure according to an embodiment of the present invention.

A cell structure 1 includes a cathode 2, an anode 3, and a solid electrolyte layer 4 arranged therebetween. As the solid electrolyte layer 4, the foregoing solid electrolyte layer is used. In the illustrated example, the anode 3 and the solid electrolyte layer 4 are unified to form an electrolyte layer-electrode assembly 5.

The anode 3 has a larger thickness than the cathode 2. The anode 3 functions as a support the solid electrolyte layer 4 (by extension, the cell structure 1). The invention is not limited to the illustrated example. The thickness of the anode 3 is not necessarily larger than that of the cathode 2. For example, the thickness of the anode 3 may be comparable to the thickness of the cathode 2.

### (Cathode)

The cathode has a porous structure capable of adsorbing, dissociating, and ionizing oxygen molecules. On the cathode 2, a reaction of protons transported through the solid electrolyte layer 4 and oxide ions (a reduction reaction of oxygen) occurs. The oxide ions are generated by dissociation of an oxidant (oxygen) introduced through an oxidant channel.

As a material for the cathode, for example, known materials used as cathodes of fuel cells can be used. Among these, lanthanum-containing compounds having a perovskite structure (for example, ferrite, manganite, and/or cobaltite) are preferred. These compounds further containing strontium are more preferred. Specific examples thereof include Lanthanum strontium cobalt ferrite (LSCF, La₁₋ₓ₃Srₓ₃Fe_{1-y1}Co_{y1}O_{3-δ}, 0 < x3 < 1, 0 < y1 < 1, δ is an oxygen vacancy concentration), lanthanum strontium manganite (LSM, La₁₋ₓ₄Srₓ₄MnO_{3-δ}, 0 < x4 < 1, δ is an oxygen vacancy concentration), lanthanum strontium cobaltite (LSC, La₁₋ₓ₅Srₓ₅CoO_{3-δ}, 0 < x5 ≤ 1, δ is an oxygen vacancy concentration).

In these perovskite oxides, the oxygen vacancy concentration may be 0 ≤ δ ≤ 0.15.

The cathode can be formed by, for example, sintering the foregoing material. For example, a binder, an additive, and/or a dispersion medium may be used together with the foregoing material, as needed.

To promote the reaction of protons and oxide ions, the cathode 2 may contain a catalyst such as Pt. In the case where the catalyst is contained, the cathode 2 can be formed by mixing the catalyst and the foregoing material and sintering the mixture.

The thickness of the cathode 2 may be, but is not particularly limited to, about 5 µm to about 40 µm.

### (Anode)

The anode 3 has a porous structure. In the anode 3, a reaction in which a fuel, such as hydrogen, introduced from a channel described below is oxidized to release protons and electrons (an oxidation reaction of the fuel) occurs.

As a material for the anode, for example, known materials used as anodes of fuel cells can be used. Specific examples thereof include a composite oxide of nickel oxide (NiO) serving as a catalyst component and a proton conductor (for example, yttrium oxide (Y₂O₃), BCY, BZY, or the compound of formula (1) (hereinafter, also referred to as "BZCY")). The use of BZCY inhibits substantial interdiffusion of metal elements contained in the anode 3 and the solid electrolyte layer 4, so that the resistance is not easily increased.

The anode 3 containing the composite oxide can be formed by, for example, mixing a NiO powder and a proton conductor powder and sintering the mixture. The anode appropriately has a thickness of, for example, 10 µm to 2 mm and may have thickness of 10 µm to 100 µm. The anode having a large thickness may function as a support that supports the solid electrolyte layer. In this case, the thickness of the anode can be appropriately selected from the range of, for example, 100 µm to 2 mm.

The introduction of a gas containing, for example, ammonia gas, methane gas, and propane gas, which decompose to form hydrogen, to the anode allows the decomposition reaction of these gases to occur to generate hydrogen. That is, the cell structure has the ability to decompose a gas and thus can be used for a gas decomposition device.

For example, hydrogen generated by the decomposition of ammonia is oxidized on the anode to form protons. The formed protons move to the cathode 2 through the solid electrolyte layer 4.

N₂ formed simultaneously by the decomposition of ammonia is ejected as exhaust from a fuel gas outlet described below. The anode may contain a catalyst having the function of decomposing the gas. An example of the catalyst having the function of decomposing a gas such as ammonia is a compound containing at least one catalytic component selected from the group consisting of Fe, Co, Ti, Mo, W, Mn, Ru, and Cu.

### [Fuel Cell]

Figure 2 is a schematic cross-sectional view of a fuel cell (solid oxide fuel cell) containing the cell structure illustrated in Fig. 1.

A fuel cell 10 includes the cell structure 1, a separator 22 including oxidant channels 23 used to supply an oxidant to the cathode 2 of the cell structure 1, and a separator 52 including fuel channels 53 used to supply a fuel to the anode 3. In the fuel cell 10, the cell structure 1 is held between the cathode-side separator 22 and the anode-side separator 52.

The oxidant channels 23 in the cathode-side separator 22 are arranged so as to face the cathode 2 of the cell structure 1. The fuel channels 53 in the anode-side separator 52 are arranged so as to face the anode 3.

The oxidant channels 23 have oxidant inlets into which the oxidant flows and oxidant outlets that eject, for example, water formed by reaction and an unused oxidant (both not illustrated). An example of the oxidant is an oxygen-containing gas. The fuel channels 53 have fuel-gas inlets into which a fuel gas flows and fuel-gas outlets that eject, for example, unused fuel and H₂O, N₂, and CO₂ formed by reaction (both not illustrated). Examples of the fuel gas include gases containing hydrogen gas, methane gas, ammonia gas, and carbon monoxide gas.

The fuel cell 10 may include a cathode-side current collector 21 arranged between the cathode 2 and the cathode-side separator 22 and an anode-side current collector 51 arranged between the anode 3 and the anode-side separator 52. The cathode-side current collector 21 functions to collect a current and to diffusively supply an oxidant gas introduced through the oxidant channels 23 to the cathode 2. The anode-side current collector 51 functions to collect a current and to diffusively supply a fuel gas introduced through the fuel channels 53 to the anode 3. Thus, the current collectors preferably have structures having sufficient air-permeability. In the fuel cell 10, the current collectors 21 and 51 are not necessarily arranged.

The fuel cell 10 contains a protonically conductive solid electrolyte layer and thus can be operated at lower than 700°C, preferably in an intermediate temperature range of about 400°C to about 600°C.

### (Separator)

In the case where a plurality of cell structures are stacked to form a fuel cell, for example, the cell structure 1, the cathode-side separator 22, and the anode-side separator 52 are stacked as a unit. For example, the cell structures 1 may be connected together in series with a separator including gas channels (oxidant channels and fuel channels) arranged on both sides thereof.

As a material for the separator, heat-resistant alloys such as stainless steels, nickel-based alloys, and chromium-based alloys are exemplified in view of proton conductivity and heat resistance. Of these, stainless steels are preferred because of their low cost. The operating temperatures of protonic ceramic fuel cells (PCFCs) are about 400°C to about 600°C; thus, stainless steels can be used as materials for separators.

### (Current Collector)

Examples of a structure for each of the cathode-side current collector and the anode-side current collector include porous metal bodies containing, for example, silver, silver alloys, nickel, and nickel alloys; metal meshes; perforated metals, expanded metals. Of these, porous metal bodies are preferred in view of lightweight properties and air-permeability. In particular, porous metal bodies having a three-dimensional mesh-like structure are preferred. The three-dimensional mesh-like structure refers to a structure in which rod-like and fibrous metals constituting a porous metal body are three-dimensionally connected together to form a network. Examples thereof include sponge-like structures and nonwoven fabric-like structures.

The porous metal body can be formed by, for example, coating a resin porous body having continuous pores with the metal described above. After the metal coating treatment, the removal of the inner resin forms a cavity in the skeleton of the porous metal body to provide a hollow, porous metal body. "Celmet" composed of nickel (manufactured by Sumitomo Electric Industries Co., Ltd.), which is a commercially available porous metal body having the structure, can be used.

The fuel cell can be produced in a known method, except that the cell structure is used.

### EXAMPLES

While the present invention will be specifically described below by examples and comparative examples, the present invention is not limited to these examples.

### Example 1 - Reference Example

### (1) Synthesis of Proton Conductor Ba_{0.892}Zr_{0.800}Y_{0.200}O_{2.900} (a1)

Barium carbonate, zirconium oxide, and yttrium oxide were placed into a ball mill in amounts such that the molar ratio of Ba to Zr to Y described in the foregoing formula was achieved, and the mixture was stirred. The mixture was uniaxially compacted to form a pellet. The pellet was fired at 1300°C for 10 hours to synthesize a proton conductor (a1).

### (2) Production of Electrolyte Layer-Anode Assembly

The proton conductor (a1) produced in item (1) described above and NiO were mixed with a binder (poly(vinyl alcohol)), a surfactant (polycarboxylic acid-based surfactant), and an appropriate amount of ethanol using a ball mill, and then the mixture was granulated. In this case, the proton conductor and NiO were mixed together in a volume ratio of 40:60. The amounts of the binder and the additive were 10 parts by mass and 0.5 parts by mass, respectively, per 100 parts by mass of the total of the proton conductor and NiO. The resulting granulated product was axially compacted to form a disc-like pellet (diameter: 20 mm). The pellet was calcined at 1,000°C.

The proton conductor (a1) produced in item (1) described above was mixed with ethyl cellulose (binder), a surfactant (polycarboxylic acid-based surfactant), and an appropriate amount of butyl Carbitol acetate to prepare an electrolyte paste. The electrolyte paste was applied to one main surface of the disc-like pellet by spin coating to form a coating. The amounts of the binder and the surfactant were 6 parts by mass and 0.5 parts by mass, respectively, per 100 parts by mass of the proton conductor.

The pellet on which the coating had been formed was subjected to debinding treatment by heating at 750°C for 10 hours. The resulting pellet was subjected to main firing by heating at 1,400°C for 10 hours. In this way, an electrolyte layer-anode assembly in which the solid electrolyte layer was integrally formed on the one main surface of the anode was produced. The thickness of the solid electrolyte layer of the resulting assembly was measured with a scanning electron microscope (SEM) and found to be 10 µm. The total thickness of the anode and the solid electrolyte layer was measured with a vernier caliper and found to be about 1.4 mm.

### (3) Production of Cell Structure

A paste for a cathode was prepared, the paste containing a powder of LSCF (La_{0.6}Sr_{0.4}Fe_{0.8}Co_{0.2}O_{3-δ} (δ ≈ 0.1)), a surfactant (polycarboxylic acid-based surfactant), and an appropriate amount of a solvent (toluene and isopropanol). The paste for a cathode was applied to a surface of the solid electrolyte layer of the assembly produced in item (2) described above and heated at 1,000°C for 2 hours to form a cathode (thickness: 10 µm). Thereby, a cell structure was formed.

In the cell structure, the ratio of elements was measured by EDX at freely selected five positions in a cross section of the solid electrolyte layer in the thickness direction, and it was found that the average composition of the entire solid electrolyte layer was Ba_{0.892}Zr_{0.800}Y_{0.200}O_{2.900}.

### (4) Production of Fuel Cell

A platinum paste was applied to a surface of each of the cathode and the anode of the cell structure produced in item (3) described above. Platinum meshes were attached thereto, forming current collectors. A cathode-side separator having oxidant channels and being composed of stainless steel was stacked on the cathode-side current collector. An anode-side separator having fuel channels and being composed of stainless steel was stacked on the anode-side current collector. Thereby, a fuel cell illustrated in Fig. 2 was produced.

### (3) Evaluation

The moisture resistance and the proton conductivity were evaluated with a powder of the resulting proton conductor or a sintered pellet produced from the powder by a procedure described below.

### (a) Moisture resistance

The powder of the proton conductor was allowed to stand at a relative humidity of 100% and a temperature of 100°C for 100 hours. The powder was quantitatively analyzed by a reference intensity ratio (RIR) method of X-ray diffraction (XRD). In this way, the composition of the proton conductor that had been humidified was evaluated.

### (b) Proton conductor

A binder (poly(vinyl alcohol)) was added to the proton conductor, and the mixture was stirred with a zirconia mortar for 10 minutes. The amount of the binder was 0.15 parts by mass per 100 parts by mass of the proton conductor. The resulting granulated mixture was axially compacted to form a disc-like pellet (diameter: 20 mm). The pellet was subjected to isostatic pressing at 2 tons/cm² to increase the density of the compact. The pellet was subjected to debinding treatment by heating at 750°C for 10 hours. Then the resulting pellet was subjected to main firing by heating at 1600°C for 24 hours. The heating of the pellet was performed while the pellet was buried in the powder of the proton conductor.

The thickness of the pellet was adjusted to 1 mm by grinding both surfaces of the resulting pellet. Pt electrodes were formed by sputtering on both surfaces of the pellet to produce a sample.

The resistance of the sample was measured by alternating current impedance method in a humidified hydrogen atmosphere. The conductivity of the sample was calculated from the measured value. The conductivity was used as an index of the proton conductivity.

### Example 2 - Reference Example

A cell structure and a fuel cell were produced as in Example 1, except that a proton conductor Ba_{0.957}Zr_{0.800}Y_{0.200}O_{2.900} (a2) was used in place of the proton conductor (a1). The proton conductor (a2) was synthesized as in item (1) of Example 1, except that the amount of barium carbonate was adjusted.

The same evaluations as in Example 1 were performed with the proton conductor and the cell structure.

### Comparative example 1

A cell structure and a fuel cell were produced as in Example 1, except that a proton conductor Ba_{0.980}Zr₀.₈₀₀Y_{0.200}O_{2.900} (b1) was used in place of the proton conductor (a1). The proton conductor (b1) was synthesized as in item (1) of Example 1, except that the amount of barium carbonate was adjusted.

The same evaluations as in Example 1 were performed with the proton conductor and the cell structure.

### Comparative example 2

A cell structure and a fuel cell were produced as in Example 1, except that a proton conductor Ba_{1.000}Zr_{0.800}Y_{0.200}O_{2.900} (b2) was used in place of the proton conductor (a1). The proton conductor (b2) was synthesized as in item (1) of Example 1, except that the amount of barium carbonate was adjusted.

The same evaluations as in Example 1 were performed with the proton conductor and the cell structure.

Table 1 lists the results of Examples 1 and 2 and Comparative examples 1 and 2. Examples 1 and 2 are denoted by A1 and A2, respectively. Comparative examples 1 and 2 are denoted by B1 and B2, respectively.

**[Table 1]**

| | x | Composition after humidification (% by mass) | | | Conductivity (mS/cm²) |
|---|---|---|---|---|---|
| | | BZY phase | BaCO₃ | Ba(OH)₂ | |
| A 1 | 0.892 | 87.1 | 12.9 | 0 | 11 |
| A 2 | 0.957 | 84.2 | 15.8 | 0 | 13 |
| B 1 | 0.980 | 67.2 | 32.8 | 0 | 15 |
| B 2 | 1.000 | 57.1 | 5. 7 | 37.2 | 20 |

As listed in Table 1, after the humidification, the proton conductors of the examples, in which the ratios x of Ba were less than 0.98, have a Ba(OH)₂ content of 0% by mass, a low BaCO₃ content of about 12% by mass to about 16% by mass, and a BZY phase content of more than 80% by mass. In contrast, the proton conductor of Comparative example 2 has, after the humidification, a Ba(OH)₂ of more than 35% by mass and a BZY phase content about 30% by mass lower than the examples. The proton conductor of Comparative example 1 has, after the humidification, a BaCO₃ content of more than twice the examples. These results indicate that in the examples, the precipitation of Ba was inhibited to inhibit the corrosion of the proton conductor even under the humidified conditions, compared with the comparative examples. Furthermore, also in the examples, a relatively high proton conductivity can be ensured. The use of a smaller thickness of the electrolyte layer can further enhance the proton conductivity of the proton conductors of the examples to easily ensure practically sufficient performance.

### Example 3 - Reference Example

A cell structure and a fuel cell were produced as in Example 1, except that a proton conductor Ba_{0.945}Zr_{0.700}Ce_{0.100}Yb_{0.200}O_{2.900} (a3) was used in place of the proton conductor (a1). The same evaluations as in Example 1 were performed with the proton conductor and the cell structure.

The proton conductor (a3) was synthesized by a procedure described below.

Barium carbonate, zirconium oxide, cerium oxide, and ytterbium oxide were placed into a ball mill in amounts such that the molar ratio of Ba to Zr to Ce to Yb described in the foregoing formula was achieved, and the mixture was stirred. The mixture was uniaxially compacted to form a pellet. The pellet was fired at 1300°C for 10 hours to synthesize the proton conductor (a3).

### Comparative example 3

A cell structure and a fuel cell were produced as in Example 1, except that a proton conductor Ba_{0.986}Zr_{0.700}Ce_{0.100}Yb_{0.200}O_{2.900} (b3) in place of the proton conductor (a1). The proton conductor (b3) was synthesized as in Example 3, except that the amount of barium carbonate was adjusted.

The same evaluations as in Example 1 were performed with the proton conductor and the cell structure.

Table 2 lists the results of Example 3 (A3) and Comparative example 3 (B3).

**[Table 2]**

| | x | Composition after humidification (% by mass) | | | Conductivity (mS/cm²) |
|---|---|---|---|---|---|
| | | BZCY phase | BaCO₃ | Ba(OH)₂ | |
| A 3 | 0.945 | 81.3 | 18.7 | 0 | 14 |
| B 3 | 0.986 | 59.2 | 5.1 | 35.7 | 17 |

As listed in Table 2, also in the case where the element M was Yb, the proton conductor of the example, in which the ratio x of Ba was less than 0.98, had higher moisture resistance than the comparative example.

### Example 4 - Reference Example

A cell structure and a fuel cell were produced as in Example 1, except that a proton conductor Ba_{0.95},Zr_{0.800}Yb_{0.200}O_{2.900} (a4) was used in place of the proton conductor (a1). The same evaluations as in Example 1 were performed with the proton conductor and the cell structure.

The proton conductor (a4) was synthesized by a procedure described below.

Barium carbonate, zirconium oxide, and ytterbium oxide were placed into a ball mill in amounts such that the molar ratio of Ba to Zr to Yb described in the foregoing formula was achieved, and the mixture was stirred. The mixture was uniaxially compacted to form a pellet. The pellet was fired at 1300°C for 10 hours to synthesize the proton conductor (a4).

### Comparative example 4

A cell structure and a fuel cell were produced as in Example 1, except that a proton conductor Ba_{0.985}Zr_{0.800}Yb_{0.200}O_{2.900} (b4) was used in place of the proton conductor (a1). The proton conductor (b4) was synthesized as in Example 4, except that the amount of barium carbonate was adjusted.

The same evaluations as in Example 1 were performed with the proton conductor and the cell structure.

Table 3 lists the results of Example 4 (A4) and Comparative example 4 (B4).

**[Table 3]**

| | x | Composition after humidification (% by mass) | | | Conductivity (mS/cm²) |
|---|---|---|---|---|---|
| | | BZYb phase | BaCO₃ | Ba(OH)₂ | |
| A 4 | 0.951 | 86.8 | 13.2 | 0 | 10 |
| B 4 | 0.985 | 68.9 | 31.1 | 0 | 12 |

As listed in Table 3, also in the case where the element M was Yb, the proton conductor of the example, in which the ratio x of Ba was less than 0.98, had higher moisture resistance than the comparative example.

### Example 5

### (1) Production of Cell Structure and Fuel Cell

In item (2) of Example 1, the electrolyte paste (containing the proton conductor (b2)) prepared in Comparative example 2 was applied to one main surface of the disc-like pellet to form a coating. The pellet on which the coating had been formed was subjected to debinding treatment by heating at 750°C for 10 hours. Subsequently, the electrolyte paste (containing the proton conductor (a1)) prepared in Example 1 was applied to a surface of the coating that had been subjected to the debinding treatment. The pellet was subjected to debinding treatment by heating at 750°C for 10 hours. The resulting pellet was subjected to main firing by heating at 1,400°C for 10 hours. In this way, an electrolyte layer-anode assembly in which the solid electrolyte layer was integrally formed on the one main surface of the anode was produced.

The thickness (T) of the solid electrolyte layer of the resulting assembly was measured with SEM and found to be 10 µm. The total thickness of the anode and the solid electrolyte layer was measured with a vernier caliper and found to be about 1.4 mm.

The ratio x1 of Ba at a position 0.25T from the interface between the solid electrolyte layer and the anode and the ratio x2 of Ba at a position 0.25T from the surface of the solid electrolyte layer were measured EPMA. The results indicated that x1 was 1.000 and x2 was 0.892.

A cell structure and a fuel cell were produced as in Example 1, except that the resulting assembly was used.

### (2) Evaluation

The powder density was measured with the cell structure produced in item (1) at 600°C and at different current densities, and the maximum power density was found to be 312 mW/cm². In the case of evaluating the power generation performance, the anode side of the cell structure was exposed to a humidified hydrogen atmosphere, and the cathode side was exposed to an air atmosphere. The powder density was evaluated with the cell structure produced in Comparative example 1 in the same way as above and found to be 344 mW/cm². As described above, in Example 5, a high power comparable to that in Comparative example 1 was obtained.

### Industrial Applicability

A solid electrolyte layer according to an embodiment of the present invention has good moisture resistance and high durability and thus is suitably used for a fuel cell (PCFC) or a cell structure therefor.

### Reference Signs List

- 1: cell structure
- 2: cathode
- 3: anode
- 4: solid electrolyte layer
- 5: electrolyte layer-electrode assembly
- 10: fuel cell
- 21, 51: current collector
- 22, 52: separator
- 23: fuel channel
- 53: oxidant channel

## Claims

1. A solid electrolyte layer for a fuel cell, comprising:
a proton conductor having a perovskite structure, the proton conductor being represented by formula (1):
BaₓZr_{y}Ce_{z}M_{1-(y+z)}O_{3-δ}
where element M is at least one selected from the group consisting of Y, Yb, Er, Ho, Tm, Gd, and Sc, 0.85 ≤ x < 0.98, 0.70 ≤ y + z < 1.00, a ratio of y/z is 0.5/0.5 to 1/0, and δ is an oxygen vacancy concentration,
wherein:
letting a thickness of the solid electrolyte layer be T, letting a ratio of Ba at a position 0.25T from one surface of the solid electrolyte layer be x1, and letting a ratio of Ba at a position 0.25T from the other surface of the solid electrolyte layer be x2, x1 > x2 is satisfied,
the other surface is brought into contact with a cathode of a fuel cell, and at least the other surface in contact with the cathode fulfils formula (1).

2. The solid electrolyte layer for a fuel cell according to claim 1, wherein 0.85 ≤ x ≤ 0.96.

3. The solid electrolyte layer for a fuel cell according to claim 1 or 2, wherein 0.75 ≤ y + z ≤ 0.90.

4. The solid electrolyte layer for a fuel cell according to any one of claims 1 to 3, wherein the element M is at least one selected from the group consisting of Y and Yb.

5. The solid electrolyte layer for a fuel cell according to any one of claims 1 to 4, wherein the ratio of y/z, namely, Zr/Ce, is 0.5/0.5 to 0.9/0.1.

6. A cell structure comprising:
a cathode;
an anode; and
a protonically conductive solid electrolyte layer arranged between the cathode and the anode,
wherein:
the solid electrolyte layer contains a proton conductor,
the proton conductor has a perovskite structure and is represented by formula (1):
BaₓZr_{y}Ce_{z}M_{1-(y+z)}O_{3-δ}
where element M is at least one selected from the group consisting of Y, Yb, Er, Ho, Tm, Gd, and Sc, 0.85 ≤ x < 0.98, 0.70 ≤ y + z < 1.00, a ratio of y/z is 0.5/0.5 to 1/0, and δ is an oxygen vacancy concentration,
letting a thickness of the solid electrolyte layer be T, letting a ratio of Ba at a position 0.25T from one surface of the solid electrolyte layer be x1, and letting a ratio of Ba at a position 0.25T from the other surface of the solid electrolyte layer be x2, x1 > x2 is satisfied,
the other surface is brought into contact with the cathode, and at least the other surface in contact with the cathode fulfils formula (1).

7. A fuel cell comprising:
the cell structure according to claim 6;
an oxidant channel to supply an oxidant to the cathode; and
a fuel channel to supply a fuel to the anode.

## Patentansprüche

1. Festelektrolyt-Schicht für eine Brennstoffzelle, die umfasst:
einen Protonenleiter, der eine Perowskit-Struktur aufweist, wobei der Protonenleiter durch die Formel (1) dargestellt wird:
BaₓZr_{y}Ce_{z}M₁-_{(y+z)}0_{3-δ}
wobei Element M wenigstens ein Element ist, das aus der Gruppe ausgewählt wird, die aus Y, Yb, Er, Ho, Tm, Gd und Sc besteht, wobei 0,85 ≤ x < 0,98, 0,70 ≤ y + z < 1,00, ein Verhältnis y/z 0,5/0,5 bis 1/0 beträgt und δ eine Sauerstoffleerstellen-Konzentration ist,
wobei:
eine Dicke der Festelektrolyt-Schicht T ist, ein Verhältnis von Ba an einer Position 0,25T von einer Oberfläche der Festelektrolyt-Schicht x1 ist, und ein Verhältnis von Ba an einer Position 0,25T von der anderen Oberfläche der Festelektrolyt-Schicht x2 ist, und x1 > x2 gilt,
die andere Oberfläche in Kontakt mit einer Kathode einer Brennstoffzelle gebracht wird, und für wenigstens die andere Oberfläche, die in Kontakt mit der Kathode ist, die Formel (1) gilt.

2. Festelektrolyt-Schicht für eine Brennstoffzelle nach Anspruch 1, wobei 0,85 ≤ x ≤ 0,96.

3. Festelektrolyt-Schicht für eine Brennstoffzelle nach Anspruch 1 oder 2, wobei 0,75 ≤ y + z ≤ 0,90.

4. Festelektrolyt-Schicht für eine Brennstoffzelle nach einem der Ansprüche 1 bis 3, wobei das Element M wenigstens ein Element ist, das aus der Gruppe ausgewählt wird, die aus Y und Yb besteht.

5. Festelektrolyt-Schicht für eine Brennstoffzelle nach einem der Ansprüche 1 bis 4, wobei das Verhältnis y/z, das heißt Zr/Ce, 0,5/0,5 bis 0,9/0,1 beträgt.

6. Zellen-Struktur, die umfasst:
eine Kathode;
eine Anode; sowie
eine Protonen leitende Festelektrolyt-Schicht, die zwischen der Kathode und der Anode angeordnet ist, wobei:
die Festelektrolyt-Schicht einen Protonenleiter enthält,
der Protonenleiter eine Perowskit-Struktur aufweist und durch die Formel (1) dargestellt wird:
BaₓZr_{y}Ce_{z}M₁-_{(y+z)}O₃-_{δ}
wobei Element M wenigstens ein Element ist, das aus der Gruppe ausgewählt wird, die aus Y, Yb, Er, Ho, Tm, Gd und Sc besteht, wobei 0,85 ≤ x < 0,98, 0,70 ≤ y + z < 1,00, ein Verhältnis y/z 0,5/0,5 bis 1/0 beträgt und δ eine Sauerstoffleerstellen-Konzentration ist,
eine Dicke der Festelektrolyt-Schicht T ist, ein Verhältnis von Ba an einer Position 0,25T von einer Oberfläche der Festelektrolyt-Schicht x1 ist, und ein Verhältnis von Ba an einer Position 0,25T von der anderen Oberfläche der Festelektrolyt-Schicht x2 ist, und x1 > x2 gilt,
die andere Oberfläche in Kontakt mit der Kathode gebracht wird, und für wenigstens die andere Oberfläche, die in Kontakt mit der Kathode ist, die Formel (1) gilt.

7. Brennstoffzelle, die umfasst:
die Zellen-Struktur nach Anspruch 6;
einen Oxidans-Kanal zum Zuführen eines Oxidans zu der Kathode; sowie
einen Brennstoff-Kanal zum Zuführen eines Brennstoffs zu der Anode.

## Revendications

1. Couche d'électrolyte solide pour une pile à combustible, comprenant :
un conducteur de proton présentant une structure de pérovskite, le conducteur de proton étant représenté par la formule (1) :
BaₓZr_{y}Ce_{z}M_{1-(y+z)}O_{3-δ}
où l'élément M est au moins un choisi dans le groupe consistant en Y, Yb, Er, Ho, Tm, Gd, et Sc, 0,85 ≤ x < 0,98, 0,70 ≤ y +z < 1,00, un rapport de y/z est de 0,5/0,5 à 1/0, et δ est une concentration de vacance d'oxygène, dans laquelle :
en définissant une épaisseur de la couche d'électrolyte solide par T, en définissant un rapport de Ba à une position 0,25T à partir d'une surface de la couche d'électrolyte solide par x1, et en définissant un rapport de Ba à une position 0,25T de l'autre surface de la couche d'électrolyte solide par x2, x1 > x2 est satisfait,
l'autre surface est mise en contact avec une cathode d'une pile à combustible, et au moins l'autre surface en contact avec la cathode satisfait la formule (1).

2. Couche d'électrolyte solide pour une pile à combustible selon la revendication 1, dans laquelle 0,85 ≤ x ≤ 0,96.

3. Couche d'électrolyte solide pour une pile à combustible selon la revendication 1 ou 2, dans laquelle 0,75 ≤ y + z ≤ 0,90.

4. Couche d'électrolyte solide pour une pile à combustible selon l'une quelconque des revendications 1 à 3, dans laquelle l'élément M est au moins un choisi dans le groupe consistant en Y et Yb.

5. Couche d'électrolyte solide pour une pile à combustible selon l'une quelconque des revendications 1 à 4, dans laquelle le rapport de y/z, précisément, Zr/Ce, est de 0,5/0,5 à 0,9/0,1.

6. Structure de pile comprenant :
une cathode ;
une anode ; et
une couche d'électrolyte solide protoniquement conductrice disposée entre la cathode et l'anode,
dans laquelle :
la couche d'électrolyte solide contient un conducteur de proton,
le conducteur de proton présente une structure de pérovskite et est représenté par la formule (1) :
BaₓZr_{y}Ce_{z}M_{1-(y+z)}O_{3-δ}
où l'élément M est au moins un choisi dans le groupe consistant en Y, Yb, Er, Ho, Tm, Gd, et Sc, 0,85 ≤ x < 0,98, 0,70 ≤ y +z < 1,00, un rapport de y/z est de 0,5/0,5 à 1/0, et δ est une concentration de vacance d'oxygène, dans laquelle :
en définissant une épaisseur de la couche d'électrolyte solide par T, en définissant un rapport de Ba à une position 0,25T à partir d'une surface de la couche d'électrolyte solide par x1, et en définissant un rapport de Ba à une position 0,25T de l'autre surface de la couche d'électrolyte solide par x2, x1 > x2 est satisfait,
l'autre surface est mise en contact avec la cathode, et au moins l'autre surface en contact avec la cathode satisfait la formule (1).

7. Pile à combustible comprenant :
la structure de pile selon la revendication 6 ;
un canal d'oxydant pour introduire un oxydant à la cathode ; et un canal de combustible pour introduire un combustible à l'anode.
